(19) **Europäisches Patentamt**
**European Patent Office**
**Office européen des brevets**

(11) **EP 4 697 640 A1**

(12) **EUROPEAN PATENT APPLICATION**

(43) Date of publication:
18.02.2026 Bulletin 2026/08

(21) Application number: 24194959.3

(22) Date of filing: 16.08.2024

(51) International Patent Classification (IPC):
*H04L 9/00* (2022.01)

(52) Cooperative Patent Classification (CPC):
**H04L 9/008;** H04L 2209/46

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nagravision Sàrl
1033 Cheseaux-sur-Lausanne (CH)**

(72) Inventors:
• **LIU, Haowen
1033 Cheseaux-sur-Lausanne (CH)**

• **FENDRI, Hedi
1033 Cheseaux-sur-Lausanne (CH)**
• **BAHROUN, Aymen
1033 Cheseaux-sur-Lausanne (CH)**
• **GRADASSI, Luca
1033 Cheseaux-sur-Lausanne (CH)**

(74) Representative: **Parker, Andrew James
Meissner Bolte Partnerschaft mbB
Patentanwälte Rechtsanwälte
Postfach 86 06 24
81633 München (DE)**

(54) **HIERARCHICAL SYSTEM FOR SECURE MULTIPARTY COMPUTATION AND ASSOCIATED METHODS**

(57) A hierarchical system configured to implement a secure multiparty computation protocol comprises: a plurality of client devices arranged in a plurality of C clusters of client devices, each cluster comprising: one or more client devices of the plurality of client devices; and a gateway device configured to communicate with the one or more client devices in the cluster, wherein, within each cluster, the one or more client devices are configured to implement a respective multiparty homomorphic encryption (MHE) protocol associated with that cluster; wherein: the plurality of C gateway devices form a gateway cluster of gateway devices, each gateway device of the plurality of C gateway devices configured to communicate with the other gateway devices; the gateway devices in the gateway cluster are configured to implement a gateway multiparty homomorphic encryption (MHE) protocol; and one or more gateway devices of the plurality of C gateway devices is configured to communicate with a central server.

Fig. 1

**Description**

## FIELD OF THE INVENTION

The present invention relates to hierarchical systems for secure multiparty computation, and corresponding methods.

## BACKGROUND

In recent years, distributed computing has become increasingly widespread and the secure handling of data between distributed devices is an ever more pressing problem to ensure data is secure from a malicious third party or an adversary.

This is especially true for geographically distributed devices, such as IoT devices, which may collect highly sensitive data that must be kept private. This data may be used as input to train machine learning models. Traditionally, data is shared by client devices directly to the cloud or a central server in plaintext. Using federated learning across the devices allows the model parameters, rather than the raw data, to be shared. However, sophisticated techniques such as gradient inversion can be used to reconstruct the original data from the shared model parameters. Therefore, it is not secure to share these model parameters unencrypted in plaintext. Novel approaches are needed to safeguard data privacy during federated training processes within large-scale networks. This is achieved by integrating encryption schemes into the federated learning framework, thereby significantly enhancing the security and privacy of the data.

Homomorphic encryption allows computations to be done on ciphertext and the decrypted result matches the result of the operation performed on the corresponding plaintext. Therefore, the model parameters can be shared with the central server and aggregated while still encrypted as ciphertext. The resultant aggregate parameters remain encrypted and can be shared to devices for decryption.

Plain homomorphic encryption (PHE) (as described in "Secure federated learning with fully homomorphic encryption for IOT communications", see references section of this application) uses a trusted third-party key generator to issue a common public-private key pair to all data contributors, clients, parties or devices. Each contributor uses this key pair for encryption and decryption. However, a system with PHE implemented has a single point of failure as a single adversary colluding with the central server can compromise the privacy of the data shared.

Fully-multiparty homomorphic encryption (FMHE) (as described in "Multiparty Homomorphic Encryption from Ring-Learning-with-Errors", see references section of this application) attempts to address this issue by only storing a local private key with each contributor which must be combined with all other contributors' local private keys to generate a global private key for decryption. All contributors also collectively generate the global public key together to use for encryption. This method is much more robust as N-1, where N is the number of contributors, adversaries cannot break the system i.e. the system is information-theoretically secure.

However, FMHE introduces issues such as: a single contributor dropping out, for example due to network connectivity issues, causes the system to fail, the system is sensitive to the slowest contributor's delay, it introduces a high time overhead and it increases communication costs during the setup phase. If a configuration update is required, for example to add, remove or update a contributor, then the entire system must be reset.

Threshold-multiparty homomorphic encryption (TMHE) (as described in "An Efficient Threshold Access-Structure for RLWE-Based Multiparty Homomorphic Encryption", see references section of this application) adapts FMHE by only requiring T of N contributors to decrypt the data, where T is a selected threshold lower than N. This makes the system much more resilient to dropout and allows a flexible approach to balancing reliability and security. The higher T is, the more secure the system and the lower T is, the more reliable or resilient the system because system failure from dropouts is less likely. However, TMHE still has a high time overhead, increased communication costs and regular system resets are required for any configuration updates to contributors.

The present invention directed to Hierarchical-Multiparty Homomorphic Encryption (H-MHE) has been devised in light of the above considerations.

## SUMMARY OF THE INVENTION

The present invention provides a hierarchical system to implement a secure multiparty computation protocol that extends present multiparty homomorphic encryption protocols by implementing one or more layers of abstracted devices between the physical client devices and a central server, wherein the abstracted devices comprise clusters of physical client devices which run one of the different multiparty homomorphic encryption (MHE) protocols, as outlined above. This system provides increased flexibility and resiliency by allowing less reliable devices to run PHE and more reliable devices to run FMHE or TMHE, while also reducing communication costs as physical device communication is limited to intra-cluster communication. System resets are also simplified as any configuration updates have limited impact outside of clusters.

More specifically, a first aspect of the invention provides a hierarchical system configured to implement a secure multiparty computation protocol, the system comprising: a plurality of client devices arranged in a plurality of C clusters of client devices, each cluster comprising: one or more client devices of the plurality of client devices; and a gateway device configured to communicate with the one or more client devices in the cluster, wherein, within each cluster, the one or more client devices are configured to implement a respective multiparty homomorphic encryption (MHE) protocol associated with that cluster; wherein: the plurality of C gateway devices form a gateway cluster of gateway devices, each gateway device of the plurality of C gateway devices configured to communicate with the other gateway devices; the gateway devices in the gateway cluster are configured to implement a gateway multiparty homomorphic encryption (MHE) protocol; and one or more gateway devices of the plurality of C gateway devices is configured to communicate with a central server. The one or more gateway devices of the plurality of C gateway devices may be configured to communicate with a central server directly, or indirectly, e.g. via another device such as another gateway device.

The plurality of client devices are divided into groups or clusters which may be known as client device clusters. These client device clusters may be virtual or logical clusters (e.g. based on some stored assignment to a cluster), i.e. the client devices may not be divided into physical clusters of devices. These client device clusters comprise different groups of one or more client devices. The gateway cluster is the group or cluster of gateway devices provided for each of the client device clusters. The provision of gateway devices in each cluster configured to communicate with the one or more client devices in the cluster may allow direct communication between each client device in the cluster and the gateway device and indirect communication between the client devices in the cluster (i.e. from one client device in the cluster to another client device in the cluster) via the gateway device. The client devices may be physical devices (or contributors or clients or parties) in a typical homomorphic multiparty encryption scheme. The gateway devices may be provided by the present invention as abstracted devices which act as a point of communication between client devices and a central server. They may act as a sub-server aggregating data from client devices in their cluster to send to the central server. The gateway device may be a virtual or logical gateway device hosted on one of the client devices or it may be hosted externally by an external server, such as a cloud computing server. Alternatively, the gateway device may be a physical gateway device provided separately to the one or more client devices in the cluster. The term "abstracted device" means from the point of view of a central server, the gateway devices are considered client devices, and the central server interacts with the gateway devices as if they are client devices. The system may comprise the central server. The cluster gateway devices may be considered to form part of an abstracted or abstraction layer, which is a different hierarchical level from the clusters of client devices. Herein, "abstraction layer" or "abstracted layer" is used to mean that the gateway devices are not physically arranged in a layer but rather that they are adapted, e.g. due to the presence of software installed on the gateway devices (which, to reiterate, may be client devices themselves) to function as physical devices which are present in a different physical layer.

It is important to note that the only physical devices in the system may be the client devices and, optionally, the central server. All of the gateway devices may be virtual or logical gateway devices which do not have a physical manifestation, but which are defined in order to provide the function of an equivalent physical device (e.g. to act as a point of communication between the different hierarchical layers of the system). Herein, the term virtual gateway device or logical gateway device may be used to refer to a software-based tool or entity which is resident on a client device or some other external device such as a server which mimics the functions and features of a physical hardware device. Alternatively put, the virtual gateway devices or the logical gateway devices may be implemented in the form of software (e.g. code) on a host device (e.g. the client device or other external device) rather than hardware.

Each cluster may run an independent, intra-cluster MHE protocol on all the client devices in the cluster. This means all the client devices in each cluster may collectively participate in executing the selected MHE protocol. Using clusters to group the client devices may isolate each cluster of client devices from all other client devices outside of that cluster. This means communication between all of the client devices is no longer required during any encryption or decryption protocol. Instead, the present system may limit communication to only between client devices in the cluster (either directly, or indirectly via the gateway device) and between gateway devices.

The MHE protocol running on each of the clusters of client devices may be a PHE protocol, an FMHE protocol or a TMHE protocol. It is desirable for the threshold number of client devices required to decrypt the data to be as high as possible to maximise security, however a high threshold requires more computation power and requires a low risk of dropouts. The PHE protocol may be considered a TMHE protocol with the minimum threshold of 1 and the FMHE protocol may be considered a TMHE protocol with the maximum threshold of M, wherein $M$ is the number of client devices in the cluster. Therefore, the present system beneficially provides the flexibility to allow the maximum possible security to be achieved across the system, according to the requirements of the client devices, by enabling the isolation of client devices with low network connectivity or computation resources. A PHE protocol may be selected for such a group of client devices with a high possibility of dropout due to network connectivity issues or limited computation resources for communication and computations. For other clusters of client devices, a TMHE protocol may be selected with a suitable threshold considering the connectivity and computation power of the client devices in the cluster. If the cluster comprises client devices with a negligible risk of dropout due to reliable network connections and/or high computation power, FMHE may be selected which maximises the security for these client devices.

The gateway devices in the gateway cluster may also run an abstracted MHE protocol, referred to herein as the gateway MHE protocol. The gateway MHE protocol determines the cluster level communication during any encryption or decryption procedures run on the system. The gateway MHE protocol may not be a real MHE protocol but an abstracted or virtual, MHE protocol as it may be applied to the abstracted devices i.e. the gateway devices, which may be virtual or logical gateway devices (and not the real client devices).

The gateway devices may be intentionally selected to be devices with high computation power and strong network connectivity. Therefore, an FMHE protocol may be selected to run on the gateway cluster. Alternatively, another MHE protocol may be run on the gateway cluster.

The MHE protocols of each of the clusters of client devices and the gateway MHE protocol may be implemented using a ring-learning-with-errors (RLWE) scheme. This implementation is described in more detail in the detailed description. It will be appreciated that any suitable scheme for implementing MHE protocols may be used such as learning-with-errors (LWE) (as described in "Multi-key homomorphic encryption from TFHE", see references section of this application) or Dijk-Gentry-Halevi-Vaikuntanathan (DGHV) (as described in "On-the-fly multiparty computation on the cloud via multikey fully homomorphic encryption", see references section of this application).

In order to initialise the present system to carry out encryption and/or decryption, public and private keys must be generated. A setup procedure may be executed on each of the client devices of the cluster, wherein the setup procedure is defined by the MHE protocol associated with that cluster. The setup procedures generate the public parameters which are used for private and public key generation.

Individual private keys may be generated by each of the client devices, which in the case of FMHE or TMHE protocols may be partial private keys or private key shares. A global public key that is the same for all of the client devices may be generated collectively by the client devices and the gateway devices.

Each cluster in the system may be configured to execute a private key generation procedure defined by the MHE protocol associated with that cluster to generate a client device private key for each of the one or more client devices in the cluster. If a cluster is running PHE, the client device private key may be the same cluster private key which is used by all the client devices in that cluster. If a cluster is running FMHE, a partial private key may be generated for each of the client devices in the cluster, wherein the partial private keys can be considered shares of the cluster private key for that cluster. If a cluster is running TMHE, a partial private key may be generated for each of the client devices in the cluster, wherein a thresholding procedure may also be executed to ensure that any threshold number of the partial private keys can be considered shares of the cluster private key for that cluster. Any of the client devices can contribute a partial private key to reach the threshold number required. It does not matter which combination of client devices contribute partial private keys during a decryption procedure, as long as the threshold number of client devices are able to contribute partial private keys.

Each cluster in the system may also be configured to execute a public key generation procedure defined by the MHE protocol associated with that cluster to generate a cluster public key based on the client device private key(s) generated for each of the one or more client devices in the cluster. If a cluster is running TMHE, only the threshold number of client devices are required to be online and contribute to the cluster public key generation. If a cluster is running PHE, only one client device is required to be online and contribute to the cluster public key generation. If a cluster is running FMHE, all the client devices are required to be online and contribute to the cluster public key generation.

Each gateway device may be configured to transmit the cluster public key generated by its own cluster to the other gateway devices in the gateway cluster and combine, according to the gateway MHE protocol, the cluster public keys received from the other gateway devices in the gateway cluster with the cluster public key generated by its own cluster, to generate a global public key. If the gateway MHE protocol is FMHE, all of the cluster public keys are combined to generate the global public key. This means all of the gateway devices must stay online during any encryption or decryption procedure. This can be achieved by configuring the gateway devices to have strong connectivity and configuring the clusters to run the appropriate MHE protocol for the level of connectivity of the client devices in the cluster.

It is desirable for configuration updates to have as little impact as possible by ensuring they can be executed as quickly as possible. If a configuration update is required on the present system, for example, to remove a client device, to add a client device or reset a client device, the process is much more efficient than standard TMHE or FMHE protocols due to the reduced communication between client devices. This impact is mainly limited to the cluster containing the configuration update. The setup procedure and private key generation procedures only need to be run on the cluster containing the configuration update. The only change outside of the affected cluster is that the global public key may need to be updated. The gateway device of the affected cluster may calculate an updated cluster public key based on the updated client device private keys of the client devices in the cluster. The updated cluster public key may then be transmitted to the other gateway devices in the system so that the global public key can be updated at all the gateway devices.

After public and private key generation, the system may be configured to execute an encryption procedure. Each client device of the plurality of client devices may be configured to execute, according to the MHE protocol, an encryption procedure on respective plaintext using the global public key, to generate a client device-level ciphertext; and transmit its client device-level ciphertext to the gateway device of its own cluster. The term "plaintext" herein refers to unencrypted data and the term "ciphertext" herein refers to encrypted data, more specifically encrypted plaintext.

Each gateway device may be configured to aggregate the client device-level ciphertexts received from the client devices in its own cluster to generate a cluster-level ciphertext; and transmit the cluster ciphertext to the central server. The gateway device may aggregate the client device-level ciphertexts using homomorphic addition, wherein the resulting aggregated ciphertext, when decrypted, is equivalent to the aggregation of the unencrypted plaintexts.

The system may include a central server which is in communication with all the gateway devices of the system. On receiving all of the cluster ciphertexts, the central server may be configured to aggregate the cluster-level ciphertexts received from each gateway device in the gateway cluster to generate an encrypted result; and transmit the encrypted result to the plurality of gateway devices in the gateway cluster. The central server may also aggregate the cluster ciphertexts using homomorphic addition. On receiving an encrypted result from the central server, each gateway device in the gateway cluster is configured to transmit the encrypted result to the one or more client devices in its own cluster.

The system may also be configured to run a decryption procedure. Each client device of the plurality of client devices may be configured to execute, using its client device private key, a decryption procedure defined by the MHE protocol associated with its own cluster, on an encrypted result to generate a client device-level partially decrypted result; and transmit the client device-level partially-decrypted result to the gateway device of its own cluster. The client device-level partially decrypted result may correspond to a partial decryption of the encrypted result.

If a cluster is running TMHE, only the threshold number of client devices are required to be online and generate a client device-level partially decrypted result. If a cluster is running PHE, only one client device is required to be online and generate a client device-level partially decrypted result. If a cluster is running FMHE, all the client devices are required to be online and generate a client device-level partially decrypted result.

Each gateway device in the gateway cluster may be configured to combine, according to the MHE protocol associated with its own cluster, client device-level partially decrypted results received at the gateway device to generate a cluster-level partially decrypted result; and transmit the cluster-level partially decrypted result to the other gateway devices in the gateway cluster; and at least one gateway device in the gateway cluster may be configured to combine, according to the gateway MHE protocol, the cluster-level partially decrypted results to generate a decrypted result and transmit the decrypted result to the client devices in its own cluster.

If a cluster is running TMHE, the gateway device may be configured to combine at least the threshold number of client device-level partially decrypted results to generate the cluster-level partially decrypted result. If a cluster is running PHE, the client device-level partially decrypted result can be used by the gateway as the cluster-level partially decrypted result, so no combination is required (i.e. only one client device-level partially decrypted result is required to generate the cluster-level partially decrypted result). If a cluster is running FMHE, the gateway device may be configured to combine all of the client device-level partially decrypted results to generate the cluster-level partially-decrypted result.

The gateway device may share the decrypted result with other gateway devices so they can share with the client devices in their own cluster. Alternatively, each gateway device in the gateway cluster may be configured to combine, according to the gateway MHE protocol, the cluster-level partially-decrypted results to generate the decrypted result at each gateway device and transmit the decrypted result to the client devices in its own cluster.

While the invention is directed, broadly, to secure multiparty computation using a distributed, hierarchical system, an example application of the invention is federated learning.

Accordingly, the system may be configured to run a federated learning protocol to train or develop a global machine learning model. The client devices may be configured to run local machine learning models on local data to generate local model parameters which can be aggregated by a central server to arrive at the model parameters of the global machine learning model. As previously stated, this allows the client devices to only share the local model parameters instead of the potentially sensitive data. Therefore, the plaintext or dataset the encryption procedure is run on may comprise the parameters of the local machine-learning model hosted on the client device. Using homomorphic addition, these parameters can be aggregated at the gateways and the central server in their encrypted form as ciphertext and then shared with the clusters to decrypt and arrive at the plaintext global model parameters. These global model parameters can be used by the client devices to update their local machine learning models.

The client devices may be in communication with Internet of Things (IoT devices) (e.g. sensors or monitors) or the client devices may be IoT devices themselves (e.g. smart watches, smartphones or smart TVs). The IoT devices collect potentially private or sensitive data. The local machine learning models on the client devices may be trained on this data.

The system may be configured to run a round of training on the local machine learning models on the client devices. The system may then run the encryption procedure on the sets of local machine learning model parameters to arrive at the encrypted set of aggregated global machine learning model parameters (i.e. ciphertext or encrypted result). The system may be configured to run the decryption procedure on the encrypted result in order to arrive at the unencrypted set of global machine learning model parameters (i.e. plaintext or decrypted result).

The first aspect of the invention is directed towards a system, but it will be appreciated that other aspects of the invention may be directed towards methods, such as methods of establishing the system of the first aspect of the invention or methods of using the system.

A second aspect of the invention provides a method of establishing a hierarchical system configured to implement a secure multiparty computation protocol, the method comprising: dividing a plurality of client devices into a plurality of C clusters, each cluster comprising: one or more client devices of the plurality of client devices; and a gateway device configured to communicate with the one or more client devices in the cluster; associating each of the clusters of client devices with a respective MHE protocol; wherein: the plurality of C gateway devices form a gateway cluster of gateway devices, each gateway device of the plurality of C gateway devices configured to communicate with the other gateway devices; one or more of the gateway devices of the plurality of C gateway devices is configured to communicate with a central server; and the method further comprises associating the gateway cluster with a MHE protocol. The optional features set out above in respect of the first aspect of the invention also apply to the second aspect of the invention except where clearly technically incompatible.

Of particular importance and as explained previously, the gateway device may be a virtual or logical gateway device hosted on one of the client devices or it may be hosted externally by an external server, such as a cloud computing server. Or alternatively, the gateway device may be a physical gateway device provided separately to the one or more client devices in the cluster. Furthermore, the gateway MHE protocol may not be a real MHE protocol but an abstracted MHE protocol as it may be applied to the abstracted devices i.e. the gateway devices (and not the real client devices).

A third aspect of the invention provides a method which may be executed by the hierarchical system of the first aspect of the invention, or which may comprise a step of providing the hierarchical system of the first aspect of the invention. The method may be a method of setting up an encryption or decryption procedure, and may comprise: by each cluster of client devices: executing a private key generation procedure defined by the MHE protocol associated with that cluster to generate a client device private key for each of the one or more client devices in the cluster; executing a public key generation procedure defined by the MHE protocol associated with that cluster to generate a cluster public key based on the client device private key(s) generated for each of the one or more client device in the cluster; and by each gateway device: transmitting the cluster public key generated by its own cluster to the other gateway devices in the gateway cluster; and combining, according to the gateway MHE protocol, the cluster public keys received from the other gateway devices in the gateway cluster with the cluster public key generated by its own cluster, to generate a global public key.

The method may be a method of encrypting, by the system of the first aspect of the invention, a plurality of plaintexts each generated at or stored on a respective client device of the plurality of client devices, the method comprising: by each client device of the plurality of client devices: executing, according to the MHE protocol, an encryption procedure on a respective plaintext using the global public key according to the MHE protocol of the cluster, to generate a client device-level ciphertext; and transmitting its client device-level ciphertext to the gateway device of its own cluster; by each gateway device of the plurality of gateway devices: aggregating the client device-level ciphertexts received from the client devices in its own cluster to generate a cluster-level ciphertext; and transmitting the cluster-level ciphertext to a central server. The method may further comprise, by the central server, aggregating the cluster-level ciphertexts received from each gateway device in the gateway cluster to generate an encrypted result; and transmit the encrypted result to the plurality of gateway devices in the gateway cluster; and by each gateway device in the gateway cluster: transmitting the encrypted result to the one or more client devices in its own cluster.

Alternatively, or additionally, the method may be a method of decrypting an encrypted result (alternatively referred to as an encrypted message, dataset or ciphertext), optionally received from the central server, by the system of the first aspect of the invention, the method comprising: by each client device of the plurality of client devices: executing, using its client device private key, a decryption procedure defined by the MHE protocol associated with its own cluster, on an encrypted result to generate a client device-level partially-decrypted result; and transmitting the client device-level partially-decrypted result to the gateway device of its own cluster; by each gateway device in the gateway cluster: combining, according to the MHE protocol associated with its own cluster, client device-level partially-decrypted results received at the gateway device to generate a cluster-level partially-decrypted result; and transmitting the cluster-level partially-decrypted result to the other gateway devices in the gateway cluster; and by one or more of the gateway devices in the gateway cluster: combining, according to the gateway MHE protocol, the cluster-level partially-decrypted results to generate a decrypted result; and transmitting the decrypted result to the client devices in its own cluster.

The optional features set out in respect of the first and second aspects of the invention also apply equally well to the methods of the third aspect of the invention. In particular, the gateway device may be a virtual gateway device hosted on one of the client devices or it may be hosted externally by an external server, such as a cloud computing server. Or alternatively, the gateway device may be a physical gateway device provided separately to the one or more client devices in the cluster. Furthermore, the gateway MHE protocol may not be a real MHE protocol but an abstracted MHE protocol as it may be applied to the abstracted devices i.e. the gateway devices (and not the real client devices).

Systems according to the first aspect of the invention are scalable to large numbers of client devices. The system of the first aspect of the invention may be considered to have three layers, arranged in a hierarchy: a base layer containing the clusters of client device, an intermediate layer comprising the gateway cluster, and a top layer comprising the central server. However, the system may be extended to an arbitrary number of layers by having a plurality of intermediate layers, each comprising a plurality of clusters of gateway devices, wherein a gateway device in each of the gateway clusters is configured to operate in the same manner as the gateway device in each of the client device clusters of the first aspect of the invention. This is with the exception of an uppermost intermediate layer, which may comprise only a single gateway cluster, which operates in the same manner as the gateway cluster of the first aspect of the invention.

More specifically, a fourth aspect of the invention comprises a hierarchical system configured to implement a secure multiparty computation protocol, the system comprising:

a plurality of client devices;
a plurality of gateway devices;
wherein the plurality of client devices and the plurality of gateway devices are arranged in a plurality of abstraction layers, the plurality of abstraction layers comprising a base layer, and $X$ intermediate layers comprising at least an uppermost intermediate layer;
**wherein the base layer comprises:**
a plurality of client devices arranged in a plurality of C base layer clusters, each base layer cluster comprising one or more client devices and a base layer gateway device which is optionally one of the client devices in the base layer cluster, the base layer gateway device configured to communicate with the one or more client devices, and each base layer cluster of the C base layer clusters is configured to implement a respective MHE protocol associated with that base layer cluster;
**wherein a first ($i$ = 1) intermediate layer comprises:**
a plurality of first intermediate layer gateway devices arranged in a plurality of first intermediate layer clusters, each of the first intermediate layer gateway devices being a base layer gateway device which part of a different respective base layer cluster and optionally being one of the client devices, and wherein each of the first intermediate layer clusters is configured to implement a respective MHE protocol associated with that cluster;
**optionally wherein, when X > 2, the i<sup>th</sup> intermediate layer comprises:**
a plurality of $i^{th}$ intermediate layer gateway devices arranged in one or more $i^{th}$ intermediate layer clusters, each of the $i^{th}$ intermediate layer gateway devices being an $(i - 1)^{th}$ intermediate layer gateway device which is part of a different respective $(i - 1)^{th}$ intermediate layer cluster, and optionally being one of the client devices, and wherein each $i^{th}$ intermediate layer cluster is configured to implement a respective MHE protocol associated with that cluster;
**wherein the $X^{th}$ intermediate abstracted layer, which is the uppermost intermediate layer, comprises**:
a plurality of $X^{th}$ intermediate layer gateway devices forming an $X^{th}$ intermediate layer gateway cluster, each of the $X^{th}$ intermediate layer gateway devices being an $(X - 1)^{th}$ intermediate layer gateway device which is part of a different respective $(X - 1)^{th}$ intermediate layer cluster, and optionally being one of the client devices, wherein the $X^{th}$ layer intermediate cluster is configured to implement a respective MHE protocol associated with that cluster, and wherein one or more of the plurality of gateway devices in the $X^{th}$ intermediate layer gateway cluster is configured to communicate with a central server.

To clarify, when there are only two intermediate layers, they are the first layer and the $X^{th}$ layer, which is the second and uppermost layer. The $i^{th}$ intermediate layers which form the subject of the "optionally..." clause are only present when there are more than two intermediate layers, i.e. when $X > 2$. The optional features set out in respect of the first to third aspects of the invention apply equally well to the system of the fourth aspect of the invention.

Below, however, we set out explicitly some optional features relating to the nature of the gateway devices, and the setup, encryption, and decryption processes which may be executed by hierarchical systems according to the fourth aspect of the invention. The process is essentially identical to the arrangement of the first aspect of the invention, except that the processes performed at the layers of gateway devices are repeated at each intermediate layer until the uppermost intermediate layer which operates in the same manner as the gateway cluster of the system of the first aspect of the invention.

*The gateway devices*

It is important to reiterate, once again, that the gateway devices may be physical gateway devices or virtual or logical gateway devices, as defined earlier in this application. The gateway devices may be client devices, and there may be no gateway devices in addition to the client devices. The client devices may be said to be "acting as" gateway devices, "behaving as" gateway devices, or "executing the function" of gateway devices, in this respect.

Essentially, the only physical devices in the system may be the client devices (and optionally, the central server). The functionality of the system may be achieved through the arrangement of client devices into the hierarchy of abstraction layers defined above, in which the client devices, e.g. by virtue of execution of software which is resident on them, perform the function of the gateway devices in the various abstraction layers (i.e. the base layer and the intermediate layers).

The MHE protocols which are implemented may be abstracted MHE protocols because they are being implemented by virtual or logical gateway devices, which may be hosted on client devices.

*Key generation*

In the base layer, each base layer cluster of client devices may be configured to execute a private key generation procedure defined by the MHE protocol associated with that base layer cluster to generate a client device private key for each of the one or more client devices in the base layer cluster. In the base layer, each base layer cluster of client devices may be configured to execute a public key generation procedure defined by the MHE protocol associated with that base layer cluster to generate a base layer cluster public key, optionally based on the private device key(s) generated by each of the one or more client devices in the base layer cluster.

In the first intermediate layer, each gateway device may be configured to transmit the base layer cluster public key generated in its own base layer cluster to the other gateway devices in its own first intermediate layer cluster. In the first intermediate layer, each gateway device may be configured to combine, according to the MHE protocol associated with its own first intermediate layer cluster, the base layer cluster public keys received from the other gateway devices it its own first intermediate layer cluster, to generate a first intermediate layer cluster public key.

Optionally, when $X > 2$, in the $i^{th}$ intermediate layer, each gateway device may be configured to transmit the $(i - 1)^{th}$ intermediate layer cluster public key generated in its own $(i - 1)^{th}$ intermediate layer cluster to the other gateway devices in its own $i^{th}$ intermediate layer cluster. In the $i^{th}$ intermediate layer, each gateway device may be configured to combine, according to the MHE protocol associated with its own $i^{th}$ intermediate layer cluster, the $(i - 1)^{th}$ intermediate layer cluster public keys received from the other gateway devices in its own $i^{th}$ intermediate layer cluster, to generate an $i^{th}$ intermediate layer cluster public key.

In the $X^{th}$ intermediate layer, each gateway device may be configured to transmit the $(X - 1)^{th}$ intermediate layer cluster public key generated in its own $(X - 1)^{th}$ intermediate layer cluster to the other gateway devices in its own $X^{th}$ intermediate layer cluster. In the $X^{th}$ intermediate layer, each gateway device may be configured to combine, according to the MHE protocol associated with its own $X^{th}$ intermediate layer cluster, the $(X - 1)^{th}$ intermediate layer cluster public keys received from the other gateway devices in its own $X^{th}$ intermediate layer cluster, to generate a global public key.

In the $X^{th}$ intermediate layer, the or each gateway device may be configured to transmit the global public key to the other devices in its own $(X - 1)^{th}$ intermediate cluster. Optionally, when $X > 2$, in the $i^{th}$ intermediate layer, each gateway device may be configured to transmit the global public key to the other devices in its own $(i - 1)^{th}$ intermediate cluster. In the first intermediate layer, each gateway device may be configured to transmit the global public key to the client devices in its own base layer cluster.

*Encryption procedure*

In the base layer, each client device may be configured to execute, according to the MHE protocol associated with its own base layer cluster, an encryption procedure on a respective plaintext using the global public key, to generate a client device-level ciphertext. In the base layer, each client device of the plurality of client devices may be configured to transmit its client device-level ciphertext to the gateway device in its own base layer cluster.

In the first intermediate layer, each gateway device may be configured to aggregate the client device-level ciphertexts received from the client devices in its own base layer cluster to generate a first intermediate layer cluster-level ciphertext. In the first intermediate layer, each gateway device may be configured to transmit the first intermediate layer cluster-level ciphertext to the other gateway devices in its own first intermediate layer cluster.

Optionally when $X > 2$, in the $i^{th}$ intermediate layer, each gateway device may be configured to aggregate the $(i - 1)^{th}$ intermediate layer cluster-level ciphertexts received from the gateway devices in its own $(i - 1)^{th}$ intermediate layer cluster to generate an $i^{th}$ intermediate layer cluster-level ciphertext. Optionally when $X > 2$, in the $i^{th}$ intermediate layer cluster, each gateway device may be configured to transmit the $i^{th}$ intermediate layer cluster-level ciphertexts to the other gateway device in its own $i^{th}$ intermediate layer cluster.

In the $X^{th}$ intermediate layer, each gateway device may be configured to aggregate the $(X - 1)^{th}$ intermediate layer cluster-level ciphertexts received from the gateway devices in its own $(X - 1)^{th}$ intermediate layer cluster to generate a $X^{th}$ intermediate layer cluster-level ciphertext. In the $X^{th}$ intermediate layer cluster, each gateway device may be configured to transmit the $X^{th}$ intermediate layer cluster-level ciphertexts to the central server.

The central server may be configured to aggregate the $X^{th}$ intermediate layer cluster-level ciphertexts to generate an encrypted result, and to transmit the encrypted result to the plurality of gateway devices in the in the $X^{th}$ intermediate layer. In the $X^{th}$ intermediate layer, each of the plurality of gateway devices may be configured to transmit the encrypted result to the other gateway devices in its own $(X - 1)^{th}$ intermediate layer cluster. Optionally, when $X > 2$, in the $i^{th}$ intermediate layer, each of the plurality of gateway devices may be configured to transmit the encrypted result to the other gateway devices in its own $(i - 1)^{th}$ intermediate layer cluster. In the first intermediate layer, each of the plurality of gateway devices may be configured to transmit the encrypted result to the client devices in its own base layer cluster.

*Decryption procedure*

In the base layer, each client device of the plurality of client devices may be configured to execute, using its client device private key, a decryption procedure defined by the MHE protocol associated with its own base layer cluster, on an encrypted result, to generate a client device-level partially decrypted result. In the base layer, each client device of the plurality of client devices may be configured to transmit its client device-level partially decrypted result to the gateway device in its own base layer cluster.

In the first intermediate layer, each gateway device is configured to combine, according to the MHE protocol associated with its own base layer cluster, the client device-level partially decrypted results to generate a respective first intermediate layer cluster-level partially decrypted result. In the first intermediate layer, each gateway device is configured to transmit the first intermediate layer cluster-level partially decrypted result to the other gateway devices in its own first intermediate layer cluster.

Optionally, when $X > 2$, in the $i^{th}$ intermediate layer, each gateway device is configured to combine, according to the MHE protocol associated with its own $(i - 1)^{th}$ intermediate layer cluster, the $(i - 1)^{th}$ intermediate layer cluster-level partially decrypted results from the gateway devices in its own $(i - 1)^{th}$ intermediate layer cluster, to generate a respective $i^{th}$ intermediate layer cluster-level partially decrypted result. Optionally, when $X > 2$, in the $i^{th}$ intermediate layer, each gateway device is configured to transmit the $i^{th}$ intermediate layer cluster-level partially decrypted result to the other gateway devices in its $i^{th}$ intermediate layer cluster.

In the $X^{th}$ intermediate layer, each gateway device is configured to combine, according to the MHE protocol associated with its own $(X - 1)^{th}$ intermediate layer cluster, the $(X - 1)^{th}$ intermediate layer cluster-level partially decrypted results from the gateway devices in its own $(X - 1)^{th}$ intermediate layer cluster, to generate a respective $X^{th}$ intermediate layer cluster-level partially decrypted result. In the $X^{th}$ intermediate layer, each gateway device is configured to transmit the $X^{th}$ intermediate layer cluster-level partially decrypted result to the other gateway devices in the $X^{th}$ intermediate layer cluster.

In the $X^{th}$ intermediate layer, at least one gateway device in the $X^{th}$ intermediate layer cluster is configured to combine, according to the MHE protocol associated with the $X^{th}$ intermediate layer cluster, the $X^{th}$ intermediate layer cluster-level partially decrypted results to generate a decrypted result. In the $X^{th}$ intermediate layer, the or each gateway device may be configured to transmit the decrypted result to the other devices in its own $(X - 1)^{th}$ intermediate cluster. Optionally, when $X > 2$, in the $i^{th}$ intermediate layer, each gateway device may be configured to transmit the decrypted result to the other devices in its own $(i - 1)^{th}$ intermediate cluster. In the first intermediate layer, each gateway device may be configured to transmit the decrypted result to the client devices in its own base layer cluster.

Further aspects of the invention provide methods corresponding to the fourth aspect of the invention.

The invention includes the combination of the aspects and preferred features described except where such a combination is clearly impermissible or expressly avoided.

## SUMMARY OF THE DRAWINGS

Embodiments and experiments illustrating the principles of the invention will now be discussed with reference to the accompanying figures in which:

- **Figure 1**. shows an example three-tier H-MHE cryptosystem,

- **Figure 2.** is a flowchart demonstrating the H-MHE set up procedure,

- **Figure 3.** is a flowchart demonstrating the H-MHE encryption procedure,

- **Figure 4.** is a flowchart demonstrating the H-MHE decryption procedure,

- **Figure 5.** shows an example four-tier H-MHE cryptosystem,

- **Figure 6.** shows an example n-tier H-MHE cryptosystem.

## DETAILED DESCRIPTION OF THE INVENTION

Aspects and embodiments of the present invention will now be discussed with reference to the accompanying figures. Further aspects and embodiments will be apparent to those skilled in the art.

In order to tackle the high time overheads, communication costs and required system resets of TMHE, the H-MHE framework has been devised. Current Multiparty Homomorphic Encryption (HME) protocols (e.g. PHE, FMHE and TMHE) can be used to enable a system to function as an abstract encryption and decryption machine using a virtual public-private key pair. The H-MHE framework extends these abstracted machines into a hierarchical structure. Typically, one layer of abstraction can be used to create a three-tier H-MHE system comprising three layers: a server, abstracted devices and real client devices. This introduces an additional layer to the typical two-tier server-client framework between the central server and the clients for intermediate aggregation.

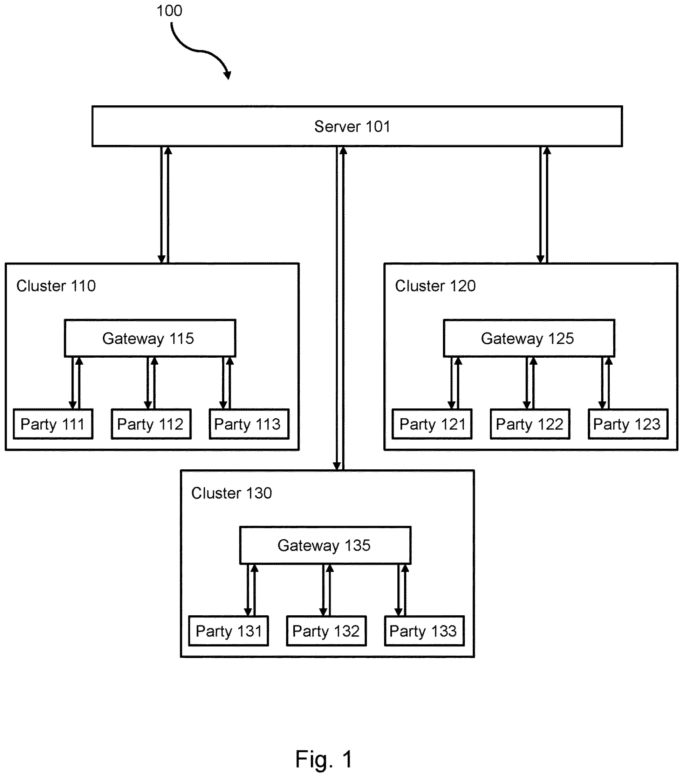

Fig. 1 shows cryptosystem 100 demonstrating one implementation of a H-MHE framework using three tiers or layers with one level of abstraction. However, it will be appreciated that further layers of abstraction may be introduced if required by the system, for example to handle large systems distributed globally.

The top layer comprises a server or central server 101. The intermediate layer comprises abstracted devices or clusters 110, 120 and 130. Fig. 1 shows three clusters in the intermediate layer; however, it will be appreciated that any number of clusters may be included in this layer. The base layer comprises real devices or data contributors or client devices or clients or parties or IoT devices 111, 112, 113, 121, 122, 123, 131, 132 and 133. Each cluster 110, 210, 310 includes a gateway or gateway device 115, 125, 135. Each cluster may communicate with the server and other clusters via the gateway. The gateways may by physical devices, or virtual devices, that act as an assistant sub server. The gateways may be IoT devices themselves.

Cluster 110 comprises gateway 115 and parties 111, 112 and 113. Cluster 120 comprises gateway 125 and parties 121, 122 and 123. Cluster 130 comprises gateway 135 and parties 131, 132 and 133. Fig 1. shows three parties in each cluster, however, it will be appreciated that any number of parties may be included in each cluster.

Each cluster 110, 120, 130 may run one of the available MHE protocols. For example, cluster 110 may run PHE. Cluster 120 may run FMHE. Cluster 130 may run TMHE. However, it will be appreciated that each cluster may run any MHE protocol. It is noted that the PHE protocol is equivalent to the TMHE protocol with the threshold number, T, of required contributors for decryption is set as 1.

The gateways 115, 125, 135 of the clusters or abstracted devices 110, 120, 130 may run any available MHE protocol among themselves (i.e. as opposed to within the cluster which they are part of) as an abstracted MHE protocol running on abstracted devices. For example, the gateways 115, 125, 135 may run an FMHE protocol. FMHE may be suitable for the gateways as they may be less at risk of dropout if they are wired into the network and are less likely to be mobile devices that suffer from connectivity issues than the parties. However, it will be appreciated that the gateways may run any suitable MHE protocol.

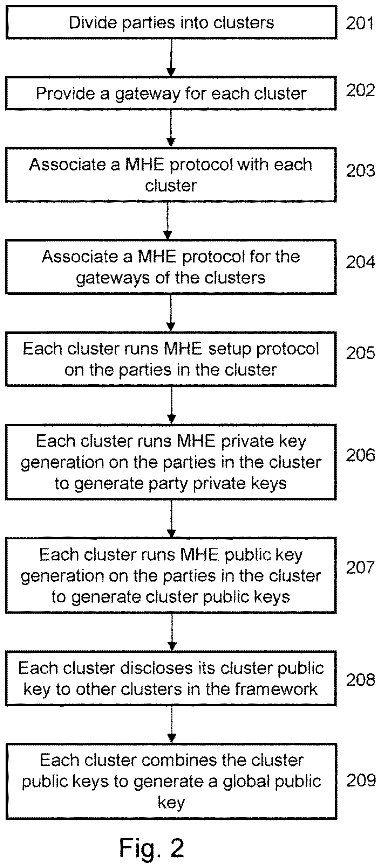

Fig 2. shows a flowchart demonstrating the initial steps taken to set up a three-tier H-MHE system so the framework is ready for encryption and decryption. In step 201 the parties are divided into groups of parties, referred to as clusters. This may be done automatically or manually. Each group of parties forms a cluster. In step 202, a gateway is provided for the cluster. At step 203, a respective MHE protocol is associated with each cluster. At step 204, a MHE protocol is associated with the gateways of the clusters, wherein the MHE protocol may be an abstracted protocol run on abstracted devices. At step 205, each cluster runs the setup on the parties for the associated MHE protocol, to generate the public parameters which are used in private and public key generation. At step 206, each cluster runs the private key generation on the parties for the associated MHE protocol, to generate a party private key at each party. When the cluster is using PHE, each party private key may be the full private key, but when the cluster is using FMHE or TMHE, each party private key may be a share of the full private key. At step 207, each cluster runs the public key generation for the associated MHE protocol to generate a cluster public key. At step 208, each cluster discloses or transmits the cluster public key with all other clusters. At step 209, each cluster combines the public keys to generate a global public key according to the MHE protocol associated with the gateways. If, for example, FMHE is running on the gateways, all the cluster public keys are aggregated, for example summed together, to generate a global public key.

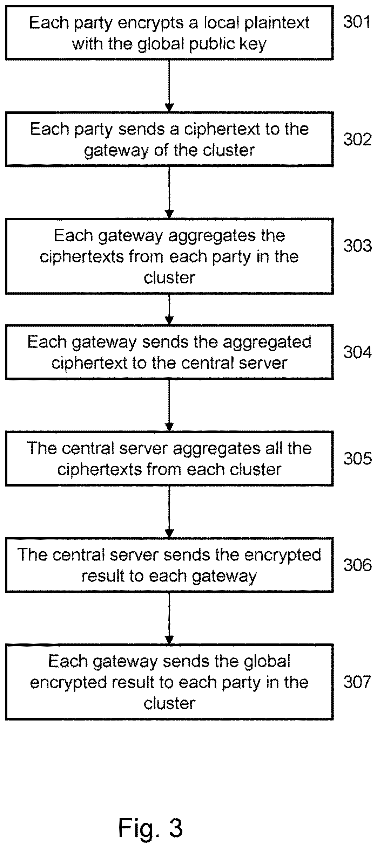

Fig. 3 shows a flowchart demonstrating the steps taken to encrypt data. Each party has a local plaintext which may, for example, be a set of model parameters from a locally trained model. At step 301, each party encrypts their local plaintext using the global public key. At step 302, each party sends their ciphertext to the gateway of the cluster. At step 303, each gateway aggregates all the ciphertexts from each party in the cluster together, using, for example, homomorphic addition. At step 304, each gateway sends their aggregated ciphertext to the central server. At step 305, the central server aggregates all of the ciphertexts from each cluster using, for example, homomorphic addition to arrive at an encrypted result. At step 306, the central server sends the encrypted result to each gateway. At step 307, each gateway sends the encrypted result to each party in the cluster.

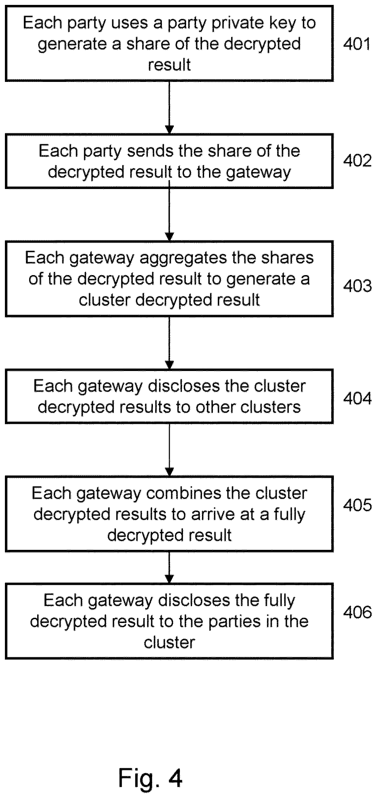

Fig. 4 shows a flowchart demonstrating the steps taken to decrypt data. At step 401, each party uses the party private key generated at step 206 on the encrypted result to generate a share of the decrypted result. The share is a partial decryption of the full encrypted result. At step 402, each party sends their share of the decrypted result to the gateway. At step 403, each gateway combines the shares of the decrypted result according to the MHE protocol running on the cluster to arrive at a cluster decrypted result. At step 404, each gateway discloses or transmits each of the cluster decrypted results to all other clusters. At step 405, each gateway combines the cluster decrypted results according to the gateway MHE protocol to arrive at a fully decrypted result. If, for example, FMHE is running on the gateways, all the cluster decrypted results are aggregated, for example summed together, to generate the fully decrypted result. At step 406, each gateway discloses or transmits the fully decrypted result to all the parties in the cluster.

The three-tier H-MHE protocol described above may be adapted to a three-tier hierarchical federated learning framework. Each party may perform a round of local training before running the encryption procedure to encrypt the local updated model. Each party may then send the encrypted updated model to the gateway in its cluster which aggregates the messages (using homomorphic addition) to send to the central server where they are aggregated again (using homomorphic addition). The aggregated message can then be sent to all the clusters to run the decrypt procedure and arrive at the plaintext of the aggregated model. To get the final model parameters an average is found by dividing by the number of parties. To get the number of parties the number of messages received by each gateway is recorded and disclosed.

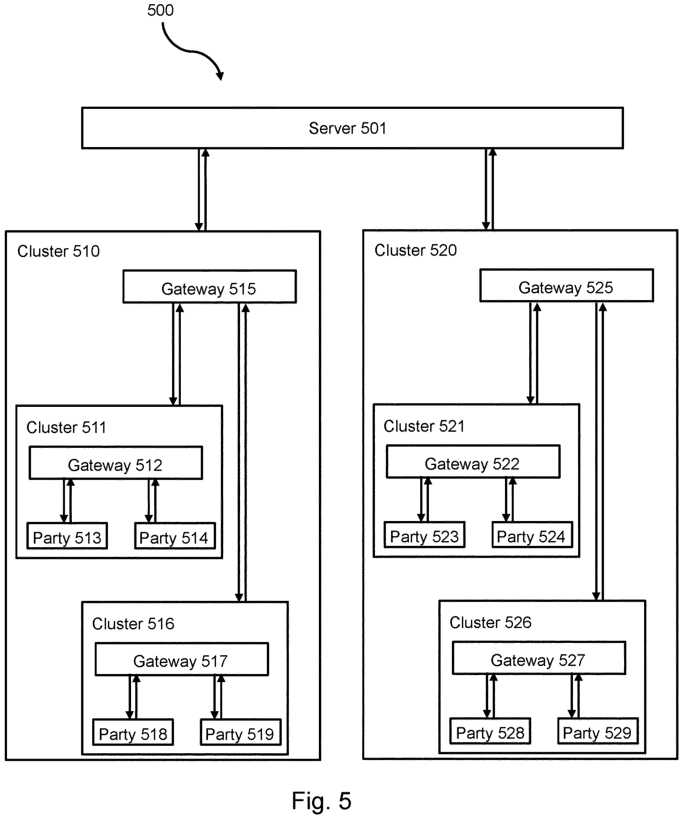

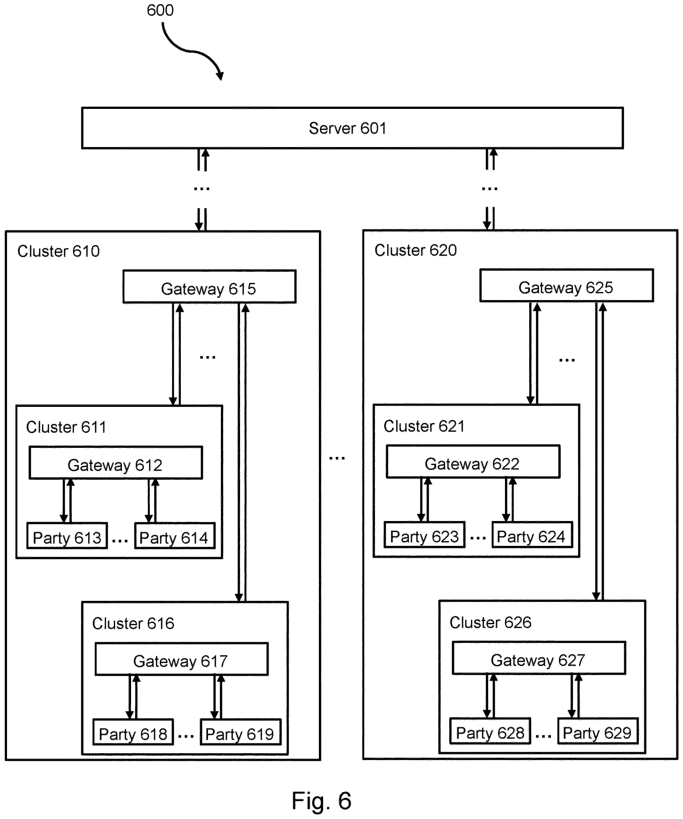

Fig. 5 shows a four-tier cryptosystem 500 in which another layer of abstraction has been added beneath the server 501. Each party 513, 514, 518, 519, 523, 524, 528 and 529 has been grouped into clusters 511, 516, 521 and 526 which have gateways 512, 517, 522 and 527 provided. Clusters 511 and 516 have themselves been grouped into another cluster 510 with gateway 515. Clusters 521 and 526 have themselves been grouped into cluster 520 with gateway 525. This means there is another layer of aggregation between the parties and the server. Gateway devices 515, 511, 516, 525, 522 and 527 may be physical devices or virtual devices. Gateway devices 515 and 525 may be provided as separate devices or they may be the same as the base layer gateway devices 512 or 517 or 522 or 527. Fig. 6 shows a n-tier cryptosystem 600. The number of layers between the parties and the server 601 can be extended as needed, depending on the needs of the system. Further layers may be suitable for globally distributed systems. Each layer may comprise any number of clusters. The final layer contains the parties or clients or devices or client devices.

Example Implementation

One example of a homomorphic encryption scheme is Ring Learning with Errors (RLWE). An example implementation is shown below.

We use the notation and core procedures of the RLWE N-out-of-N-threshold Encryption scheme (FMHE Scheme). Its ciphertext space is a polynomial quotient ring

$$R_q = \mathbb{Z}_q[X]/(X^n+1)$$

where the polynomial degree n is a power of two, the polynomial-coefficient modulus q is a product of L different primes $q_1, ..., q_L$. $\mathbb{Z}_q$ represents the ring of integers modulo q, where q is the modulus and X is the indeterminate (or variable) in the polynomial ring. In the context of RLWE and cryptography, $\mathbb{Z}_q$ usually denotes the set of integers $\{0,1,...,q-1\}$ with addition and multiplication performed modulo q and $\mathbb{Z}_q$ represents the ring of polynomials with coefficients in $\mathbb{Z}_q$. Thus, $\mathbb{Z}_q$ is associated with the ring of integers modulo q, and X is the variable in the polynomial ring.

Hence, we can use the isomorphism $R_q \sim R_{q1} \times ... \times R_{qL}$ provided by the Chinese remainder theorem (CRT) to perform the operations in the residue rings, without resorting to arbitrary-precision integer arithmetic.

Moreover, we choose each $q_i$ such that $q_i \equiv 1 \bmod 2n$, which enables the representation of $R_{qi}$ elements under the number-theoretic transform domain (NTT), under which both ring operations are performed coefficient-wise.

We denote $\alpha \leftarrow D$ the sampling of $\alpha$ according to a distribution D. We simplify this notation for the case of uniform sampling of a ring element that we denote $\alpha \leftarrow R_q$. Let $Key(R_q)$ be a secret-key distribution over $R_q$ for which the coefficients are sampled uniformly in $\{-1, 0, 1\} \bmod q$, let $Err(R_q)$ be an error distribution where the coefficients are sampled from a discrete Gaussian distribution of small variance $\sigma^2$, and let $Smudge(R_q)$ be a suitable smudging distribution for the noise flooding technique (typically, a discrete Gaussian distribution of large variance).

Finally, let $CRS(R_q)$ be the uniform distribution in $R_q$ according to the common reference string (i.e., elements sampled from this distribution are the same for all parties).

**Scheme: PHE = (Setup, SecKeyGen, PubKeyGen, Encrypt, Decrypt):**

- PHE.Setup: A trusted third party agrees on the public parameters $(n, q, \sigma, Key, Err)$.

- PHE.SecKeyGen: The trusted third party sample $S \leftarrow Key(R_q)$.

- PHE.PubKeyGen(s): The trusted third party samples $p_1 \leftarrow CRS(R_q)$, $e \leftarrow Err(R_q)$, computes $p_0 = -Sp_1 + e$, and sets pk= $(p_0, p_1)$. The trusted third party discloses the key pair (S, pk) to all parties in P.

- PHE.Encrypt(pk, m): Sample $u \leftarrow Key(R_q)$, $e_0, e_1 \leftarrow Err(R_q)$ and output: ct = $(c_0, c_1) = (m+up_0+e_0, up_1+e_1)$.

- PHE.Decrypt(ct, s): Each party $P_i$ computes $m \approx c_0 + c_1 S$.

**Scheme: FMHE = (Setup, SecKeyGen, PubKeyGen, Encrypt, Decrypt):**

- FMHE.Setup: The parties agree on the public parameters (n, q, $\sigma$, Key, Err).

- FMHE.SecKeyGen: Each party $P_i$ samples $s_i \leftarrow Key(R_q)$.

- FMHE.PubKeyGen($s_1$, ..., $s_N$):

  1. Each party $P_i$ samples $p_1 \leftarrow CRS(R_q)$, $e \leftarrow Err(R_q)$ and discloses: $p_{0,1} = -s_i p_1 + e$. ($p_1$ is the same for each party because it's sampled from the common random string. However, for the errors, e, sampled by each party, they are unique and secret so the secret keys, $s_i$, cannot be derived from the partial public keys, $p_{0,i}$)

  2. Each party computes $p_0 = \Sigma p_{0,i}$ and sets pk=$(p_0, p_1)$.

- FMHE.Encrypt(pk, m): Sample $u \leftarrow Key(R_q)$, $e_0, e_1 \leftarrow Err(R_q)$ and output: ct = $(c_0, c_1) = (m+up_0+e_0, up_1+e_1)$.

- FMHE.Decrypt(ct, $s_1$, ..., $s_N$):

  1. Each party $P_i$ samples $e_i \leftarrow Smudge(R_q)$ and discloses $h_i = c_1 s_i + e_i$.

  2. Each party can the compute $m \approx c_0 + \Sigma h_i$.

**Scheme: Share Re-sharing**: for a set of parties P in the FMHE scheme where $P_i \varepsilon P$ holds secret-key share $s_i$, we define our resharing scheme as the three-tuple of procedures T=(Setup, Thresholdize, Combine). Intuitively, scheme T applies the Shamir secret-sharing scheme over $R_q$ to the parties' key, which relaxes the N-out-of-N access-structure of the FMHE scheme to a t-out-of-N-threshold one.

**Scheme: T = (Setup, Thresholdize, Combine):**

- T.Setup: Each party $P_i \varepsilon P$ is associated with a public point $\alpha_i \varepsilon R_q$ such that $\alpha_i - \alpha_j$ is a unit for all i, j, i ≠ j.

- T.Thresholdize(t, $s_1$, ..., $s_N$, $\alpha_1$, ..., $\alpha_N$):

  1. Each party $P_i$ samples $c_{i,1}$, ..., $c_{i,t-1} \leftarrow R_q$.

  2. Each party $P_i$ sends $\dot{s}_{i,j} = s_i + \Sigma^{t-1}_{k=1} c_{l,k}\alpha^k_j$ to each party $P_j$.

  3. Each party $P_i$ receives $\dot{s}_{j,l}$ from each party $P_j$ and computes: $\dot{s}_i = \Sigma^N_{j=1} \dot{s}_{j,l}$.

- T.Combine($\dot{s}_1$, ..., $\dot{s}_t$, $\alpha_1$, ..., $\alpha_t$): For P' is a fraction of P, |P'| ≥ t, each party $P_i \varepsilon P'$ computes $s'_i = \dot{s}_i \Pi^t_{j=1,i \neq j}(\alpha_j/(\alpha_j - \alpha_i))$.

By combining FMHE and T we can derive TMHE as the union tuple FMHE u T, which provides a t-out-of-N-threshold encryption scheme.

**Scheme: TMHE = FMHE u T:**

- TMHE.Setup: run the FMHE.Setup and T.Setup procedures.

- TMHE.SecKeyGen:

  1. run $(s_1, ..., s_N) \leftarrow$ FMHE.SecKeyGen.

  2. run T.Thresholdize$(t, s_1, ..., s_N, \alpha_1, ..., \alpha_N)$.

- TMHE.PubKeyGen$(\dot{s}_1, ..., \dot{s}_t)$:

  1. Obtain $P_{online} \leftarrow$ Env (pick online parties from the environment)

  2. If $| P_{online} | < t$, return $\perp$

  3. Choose t parties $P_{online}$ and run $(s'_1, ..., s'_t) \leftarrow$ T.Combine

  4. execute the FMHE.PubKeyGen$(s'_1, ..., s'_t)$ protocol.

- TMHE.Encrypt(pk, m): run the FMHE.Encrypt procedure.

- TMHE.Decrypt$(ct, \dot{s}_1, ..., \dot{s}_t)$:

  1. Obtain $P_{online} \leftarrow$ Env (pick online parties from the environment)

  2. If $| P_{online} | < t$, return $\perp$

  3. Choose t parties $P_{online}$ and run $(s'_1, ..., s'_t) \leftarrow$ T.Combine

  4. Execute the FMHE.Decrypt$(ct, s'_1, ..., s'_t)$ protocol.

In one example, each cluster runs a protocol $\psi \, \varepsilon$ {PHE, FMHE, TMHE}, and among gateways and the central server FMHE is run. Clusters with indices in set D run FMHE, clusters with indices in set V run TMHE, and clusters with indices in set L run PHE. We define this H-MHE protocol as the five-tuple of procedures H-MHE = (Setup, SecKeyGen, PubKeyGen, Encrypt, Decrypt):

- H-MHE.Setup: Each cluster $C_d$, d $\varepsilon$ D runs FMHE.Setup, each cluster $C_v$, v $\varepsilon$ V runs FMHE.Setup, and each cluster $C_l$, l $\varepsilon$ L runs PHE.Setup, on the public parameters (n, q, o, Key, Err).

- H-MHE.SecKeyGen: Each cluster $C_d$, d $\varepsilon$ D runs $S_d := \{s_{d,1}, ..., s_{d,Nd}\} \leftarrow$ FMHE.SecKeyGen, each cluster $C_v$, v $\varepsilon$ V runs $S_v := \{ \dot{s}_{v,1}, ..., \dot{s}_{v,Nv} \} \leftarrow$ TMHE.SecKeyGen, and each cluster C, running PHE runs $S_l \leftarrow$ PHE.SecKeyGen.

- H-MHE.PubKeyGen$(S_i, i \, \varepsilon \, D \, u \, V \, u \, L)$:

  1. Each cluster $C_d$, d $\varepsilon$ D runs $(p_{0,d}, p_1) \leftarrow$ FMHE.PubKeyGen$(S_d)$, each cluster $C_v$, v $\varepsilon$ V runs $(p_{0,v}, p_1) \leftarrow$ TMHE.PubKeyGen$(S_v)$, and each cluster $C_l$, l $\varepsilon$ L runs $(p_{0,l}, p_1) \leftarrow$ TMHE.PubKeyGen$(S_l)$. Each cluster discloses its $p_{0,l}$ to other clusters.

  2. Each cluster computes $p_0 = \Sigma p_{0,l}$ and sets pk = $(p_0, p_1)$.

- H-MHE.Encrypt(pk, m): run the FMHE.Encrypt procedure.

- H-MHE.Decrypt$(ct, S_i, i \, \varepsilon \, D \, u \, V \, u \, L)$:

  1. Parallelly each cluster runs:

    ▪ For each cluster $C_d$, d $\varepsilon$ D, each party $P_{d,i}$ in $C_d$ samples $e_{d,i} \leftarrow$ Smudge$(R_q)$ and discloses $h_{d,i} = c_1 s_{d,i} + e_{d,i}$.

    ▪ For each cluster $C_l$, l $\varepsilon$ L, pick up an online party $P_{l,i}$ in $C_l$. $P_{l,i}$ samples $e_{l,i} \leftarrow$ Smudge$(R_q)$ and discloses $h_{l,i} =$

$c_1S_l + e_{l,i}$.

- For each cluster $C_v$, $v \in V$:

  1. Obtain $P_{online} \leftarrow$ Env (pick online parties from the environment)

  2. If $| P_{online} | < tv$, return $\perp$

  3. Choose tv parties $P_{online}$ and run $(s'_{v,1}, ..., s'_{v,tv}) \leftarrow$ T.Combine

  4. each party $P_{v,i}$ in $P_{online}$ samples $e_{v,i} \leftarrow$ Smudge($R_q$) and discloses $h_{v,i} = c_1 s'_{v,i} + e_{v,i}$.

2. Each cluster can then compute $m \approx c_0 + \Sigma h_{i,j}$.

The H-MHE framework, advantageously over prior MHE frameworks, provides flexibility for different network environments and computation resources. This allows a more flexible level of resilience to delays or dropouts, while preserving the same guarantee against collusion. For example, clusters with weaker network reliability and less computation resources can choose a small threshold, while clusters with a reliable network and sufficient computation power can choose a much bigger threshold, because the bigger the threshold is, the more a reliable network and higher computation power are required. Thus, this feature makes H-MHE much more suitable for large-scale and heterogeneous networks than any existing MHE schemes.

Furthermore, the H-MHE framework advantageously significantly reduces the computation and communication cost by splitting the network into several clusters, thereby improving the efficiency of the system. A cluster isolates a set of parties from all other parties in the rest of the network, so that the computations and communications that should happen with parties in the whole network only happen with parties within a single cluster. This feature can be observed during any operations needing disclosure or broadcast of information, e.g., the procedure of thresholdization.

The H-MHE framework also advantageously reduces the influence of any configuration changes required (for example, adding, changing or removing a party). Clustering isolates different parties meaning a configuration change has little influence on other clusters (only the global public key must be updated). A full re-setup only happens within the cluster with the configuration changes, whereas the whole system must be re-setup when there is a configuration change in existing MHE systems.

The table below compares the setup run time (including the Setup, SecKeyGen, PubKeyGen procedures as described above) and federated learning (FL) run time of the training process for 10 epochs on the MNIST dataset for H-MHE and TMHE.

|  | Setup run time | FL run time |
|---|---|---|
| H-MHE | 19s | 17m36s |
| TMHE | 6m11s | 44m3s |

This demonstrates the efficiency of the system by speeding up the setup time by ~20 times and the training runtime by 2.5 times.

The other advantages of H-MHE, for example, resilience to dropout, flexibility in the configuration and isolation among different parties in a large-scale network, are guaranteed by design.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## REFERENCES

A number of publications are cited above in order to more fully describe and disclose the invention and the state of the art to which the invention pertains. Full citations for these references are provided below. The entirety of each of these references is incorporated herein.

Hijazi, N. M., Aloqaily, M., Guizani, M., Ouni, B. and Karray, F. (2024). Secure Federated Learning With Fully Homomorphic Encryption for IoT Communications. IEEE Internet of Things Journal, vol. 11, no. 3, pp. 4289-4300. doi: 10.1109/JIOT.2023.3302065.

Mouchet, C., Troncoso-Pastoriza, J.R., Bossuat, J., & Hubaux, J. (2021). Multiparty Homomorphic Encryption from Ring-Learning-with-Errors. Proceedings on Privacy Enhancing Technologies, 2021, 291 - 311. doi:10.2478/popets-2021-0071

Mouchet, C., Bertrand, E. & Hubaux, JP. (2023). An Efficient Threshold Access-Structure for RLWE-Based Multiparty Homomorphic Encryption. J Cryptol 36, 10. doi: 10.1007/s00145-023-09452-8

Chen, H., Chillotti, I., Song, Y. (2019). Multi-Key Homomorphic Encryption from TFHE. In: Galbraith, S., Moriai, S. (eds) Advances in Cryptology -ASIACRYPT 2019. ASIACRYPT 2019. Lecture Notes in Computer Science(), vol 11922. Springer, Cham. doi: 10.1007/978-3-030-34621-8_16

López-Alt, A., Tromer, E., & Vaikuntanathan, V. (2012). On-the-fly multiparty computation on the cloud via multikey fully homomorphic encryption. IACR Cryptol. ePrint Arch., 2013, 94. doi:10.1145/2213977.2214086

**Claims**

1. A hierarchical system configured to implement a secure multiparty computation protocol, the system comprising:

    a plurality of client devices arranged in a plurality of C clusters of client devices, each cluster comprising:

        one or more client devices of the plurality of client devices; and
        a gateway device configured to communicate with the one or more client devices in the cluster,

    wherein, within each cluster, the one or more client devices are configured to implement a respective multiparty homomorphic encryption (MHE) protocol associated with that cluster;
    wherein:

        the plurality of C gateway devices form a gateway cluster of gateway devices, each gateway device of the plurality of C gateway devices configured to communicate with the other gateway devices;
        the gateway devices in the gateway cluster are configured to implement a gateway multiparty homomorphic encryption (MHE) protocol; and
        one or more gateway devices of the plurality of C gateway devices is configured to communicate with a central server.

2. The system of claim 1, wherein the MHE protocol associated with each cluster of client devices is:

a plain homomorphic encryption (PHE) protocol;
a fully-multiparty homomorphic encryption (FMHE) protocol; or
a threshold-multiparty homomorphic encryption (TMHE) protocol.

3. The system of claim 1 or claim 2, wherein the gateway MHE protocol is a FMHE protocol.

4. The system of any one of claims 1 to 3, wherein:
the MHE protocols of each of the clusters of client devices and the gateway MHE protocol is implemented using a ring-learning-with-errors (RLWE) scheme.

5. The system of any one of claims 1 to 4, wherein:

each of the client devices is an Internet of Things (IoT) device or
each of the client devices is in communication with one or more IoT devices.

6. The system of any one of claims 1 to 5, wherein each gateway device is either:

a virtual gateway device hosted on one or more of the client devices or on an external server; or
a physical gateway device which is separate from the one or more client devices in its cluster.

7. The system of any one of claims 1 to 6, wherein:

each cluster of client devices is configured to:

execute a private key generation procedure defined by the MHE protocol associated with that cluster to generate a client device private key for each of the one or more client devices in the cluster;
execute a public key generation procedure defined by the MHE protocol associated with that cluster to generate a cluster public key based on the client device private key(s) generated for each of the one or more client devices in the cluster; and

each gateway device is configured to:

transmit the cluster public key generated by its own cluster to the other gateway devices in the gateway cluster; and
combine, according to the gateway MHE protocol, the cluster public keys received from the other gateway devices in the gateway cluster with the cluster public key generated by its own cluster, to generate a global public key.

8. The system of claim 7 wherein:

each client device of the plurality of client devices is configured to:

execute, according to the MHE protocol associated with its own cluster, an encryption procedure on a respective plaintext using the global public key, to generate a client device-level ciphertext; and
transmit its client device-level ciphertext to the gateway device of its own cluster;

each gateway device is configured to:

aggregate the client device-level ciphertexts received from the client devices in its own cluster to generate a cluster-level ciphertext; and
transmit the cluster ciphertext to a central server.

9. The system of claim 7 or claim 8, wherein:

the system is a hierarchical federated learning system configured to develop a global machine-learning model; and
the respective plaintexts comprise parameters of a local machine-learning model hosted on the respective client device.

10. The system of claim 8 or claim 9, further comprising the central server, wherein

the central server is configured to:

aggregate the cluster-level ciphertexts received from each gateway device in the gateway cluster to generate an encrypted result; and
transmit the encrypted result to the plurality of gateway devices in the gateway cluster; and

each gateway device in the gateway cluster is configured to transmit the encrypted result to the one or more client devices in its own cluster.

11. The system of claim 9 or claim 10, wherein:
the encrypted result comprises an encrypted set of parameters of the global machine-learning model.

12. The system of any one of claims 8 to 10, wherein:

each gateway device is configured to aggregate the client device-level ciphertexts using homomorphic addition; and/or
the central server is configured to aggregate the cluster-level ciphertexts using homomorphic addition.

13. The system of any one of claims 1 to 12, wherein:

each client device of the plurality of client devices is configured to:

execute, using its client device private key, a decryption procedure defined by the MHE protocol associated with its own cluster, on an encrypted result to generate a client device-level partially-decrypted result; and
transmit the client device-level partially-decrypted result to the gateway device of its own cluster;

each gateway device in the gateway cluster is configured to:

combine, according to the MHE protocol associated with its own cluster, client device-level partially-decrypted results received at the gateway device to generate a cluster-level partially-decrypted result; and
transmit the cluster-level partially-decrypted result to the other gateway devices in the gateway cluster; and

at least one gateway device in the gateway cluster is configured to:

combine, according to the gateway MHE protocol, the cluster-level partially-decrypted results to generate a decrypted result; and
transmit the decrypted result to the client devices in its own cluster.

14. The system of claim 13, wherein:

each gateway device is configured to:

combine, according to the gateway MHE protocol, the cluster-level partially-decrypted results to generate a decrypted result; and
transmit the decrypted result to the client devices in its own cluster.

15. A hierarchical system configured to implement a secure multiparty computation protocol, the system comprising:

a plurality of client devices;
a plurality of gateway devices;
wherein the plurality of client devices and the plurality of gateway devices are arranged in a plurality of abstraction layers, the plurality of abstraction layers comprising a base layer, and X intermediate layers comprising at least an uppermost intermediate layer;
**wherein the base layer comprises**:
a plurality of client devices arranged in a plurality of C base layer clusters, each base layer cluster comprising one or more client devices and a base layer gateway device which is optionally one of the client devices in the base layer cluster, the base layer gateway device configured to communicate with the one or more client devices, and each base layer cluster of the C base layer clusters is configured to implement a respective MHE protocol associated with that base layer cluster;

**wherein a first ($i$ = 1) intermediate layer comprises**:

a plurality of first intermediate layer gateway devices arranged in a plurality of first intermediate layer clusters, each of the first intermediate layer gateway devices being a base layer gateway device which part of a different respective base layer cluster and optionally being one of the client devices, and wherein each of the first intermediate layer clusters is configured to implement a respective MHE protocol associated with that cluster;

**optionally wherein, when X > 2, the $i^{th}$ intermediate layer comprises:**

a plurality of $i^{th}$ intermediate layer gateway devices arranged in one or more $i^{th}$ intermediate layer clusters, each of the $i^{th}$ intermediate layer gateway devices being an $(i-1)^{th}$ intermediate layer gateway device which is part of a different respective $(i-1)^{th}$ intermediate layer cluster, and optionally being one of the client devices, and wherein each $i^{th}$ intermediate layer cluster is configured to implement a respective MHE protocol associated with that cluster;

**wherein the $X^{th}$ intermediate abstracted layer, which is the uppermost intermediate layer, comprises**:

a plurality of $X^{th}$ intermediate layer gateway devices forming an $X^{th}$ intermediate layer gateway cluster, each of the $X^{th}$ intermediate layer gateway devices being an $(X-1)^{th}$ intermediate layer gateway device which is part of a different respective $(X-1)^{th}$ intermediate layer cluster, and optionally being one of the client devices, wherein the $X^{th}$ layer intermediate cluster is configured to implement a respective MHE protocol associated with that cluster, and wherein one or more of the plurality of gateway devices in the $X^{th}$ intermediate layer gateway cluster is configured to communicate with a central server

100

Server 101

Cluster 110

Gateway 115

Party 111 | Party 112 | Party 113

Cluster 120

Gateway 125

Party 121 | Party 122 | Party 123

Cluster 130

Gateway 135

Party 131 | Party 132 | Party 133

Fig. 1

```
┌─────────────────────────────────────┐
│      Divide parties into clusters    │ 201
└─────────────────────────────────────┘
                  │
                  ▼
┌─────────────────────────────────────┐
│   Provide a gateway for each cluster │ 202
└─────────────────────────────────────┘
                  │
                  ▼
┌─────────────────────────────────────┐
│   Associate a MHE protocol with each │ 203
│              cluster                 │
└─────────────────────────────────────┘
                  │
                  ▼
┌─────────────────────────────────────┐
│    Associate a MHE protocol for the  │ 204
│      gateways of the clusters        │
└─────────────────────────────────────┘
                  │
                  ▼
┌─────────────────────────────────────┐
│   Each cluster runs MHE setup protocol│ 205
│      on the parties in the cluster   │
└─────────────────────────────────────┘
                  │
                  ▼
┌─────────────────────────────────────┐
│    Each cluster runs MHE private key │
│  generation on the parties in the cluster │ 206
│      to generate party private keys  │
└─────────────────────────────────────┘
                  │
                  ▼
┌─────────────────────────────────────┐
│    Each cluster runs MHE public key  │
│  generation on the parties in the cluster │ 207
│      to generate cluster public keys │
└─────────────────────────────────────┘
                  │
                  ▼
┌─────────────────────────────────────┐
│  Each cluster discloses its cluster public │
│  key to other clusters in the framework │ 208
└─────────────────────────────────────┘
                  │
                  ▼
┌─────────────────────────────────────┐
│   Each cluster combines the cluster  │
│ public keys to generate a global public │ 209
│                key                   │
└─────────────────────────────────────┘
```

Fig. 2

```
┌─────────────────────────────────┐
│  Each party encrypts a local    │  301
│  plaintext with the global      │
│  public key                     │
└─────────────────────────────────┘
                │
                ▼
┌─────────────────────────────────┐
│  Each party sends a ciphertext  │  302
│  to the gateway of the cluster  │
└─────────────────────────────────┘
                │
                ▼
┌─────────────────────────────────┐
│  Each gateway aggregates the    │  303
│  ciphertexts from each party in │
│  the cluster                    │
└─────────────────────────────────┘
                │
                ▼
┌─────────────────────────────────┐
│  Each gateway sends the         │  304
│  aggregated ciphertext to the   │
│  central server                 │
└─────────────────────────────────┘
                │
                ▼
┌─────────────────────────────────┐
│  The central server aggregates  │  305
│  all the ciphertexts from each  │
│  cluster                        │
└─────────────────────────────────┘
                │
                ▼
┌─────────────────────────────────┐
│  The central server sends the   │  306
│  encrypted result to each       │
│  gateway                        │
└─────────────────────────────────┘
                │
                ▼
┌─────────────────────────────────┐
│  Each gateway sends the global  │  307
│  encrypted result to each party │
│  in the cluster                 │
└─────────────────────────────────┘
```

Fig. 3

```
┌─────────────────────────────────────┐
│ Each party uses a party private key to │  401
│ generate a share of the decrypted      │
│ result                                  │
└─────────────────────────────────────┘
                  │
                  ▼
┌─────────────────────────────────────┐
│ Each party sends the share of the      │  402
│ decrypted result to the gateway         │
└─────────────────────────────────────┘
                  │
                  ▼
┌─────────────────────────────────────┐
│ Each gateway aggregates the shares      │
│ of the decrypted result to generate a   │  403
│ cluster decrypted result                │
└─────────────────────────────────────┘
                  │
                  ▼
┌─────────────────────────────────────┐
│ Each gateway discloses the cluster      │
│ decrypted results to other clusters     │  404
└─────────────────────────────────────┘
                  │
                  ▼
┌─────────────────────────────────────┐
│ Each gateway combines the cluster       │
│ decrypted results to arrive at a fully  │  405
│ decrypted result                        │
└─────────────────────────────────────┘
                  │
                  ▼
┌─────────────────────────────────────┐
│ Each gateway discloses the fully        │
│ decrypted result to the parties in the  │  406
│ cluster                                 │
└─────────────────────────────────────┘
```

Fig. 4

500

Server 501

Cluster 510

Gateway 515

Cluster 511

Gateway 512

Party 513

Party 514

Cluster 516

Gateway 517

Party 518

Party 519

Cluster 520

Gateway 525

Cluster 521

Gateway 522

Party 523

Party 524

Cluster 526

Gateway 527

Party 528

Party 529

Fig. 5

Fig. 6

| | Europäisches Patentamt European Patent Office Office européen des brevets | **EUROPEAN SEARCH REPORT** | | **Application Number** EP 24 19 4959 |
|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/188319 A1 (FROELICHER DAVID [CH] ET AL) 15 June 2023 (2023-06-15) * paragraph [0022] - paragraph [0036] * ----- | 1-15 | INV. H04L9/00 |
| A | ZHOU DEHUA ET AL: "HEND-FL: Accurate Federated Learning Using Homomorphic Encryption and a New Distributed Protocol", 2022 IEEE INTL CONF ON DEPENDABLE, AUTONOMIC AND SECURE COMPUTING, INTL CONF ON PERVASIVE INTELLIGENCE AND COMPUTING, INTL CONF ON CLOUD AND BIG DATA COMPUTING, INTL CONF ON CYBER SCIENCE AND TECHNOLOGY CONGRESS (DASC/PICOM/CBDCOM/CYBERSCITECH), IEEE, 12 September 2022 (2022-09-12), pages 1-9, XP034245184, DOI: 10.1109/DASC/PICOM/CBDCOM/CY55231.2022.9928012 [retrieved on 2022-12-13] * Section III and IV. A. * ----- | 1-15 | TECHNICAL FIELDS SEARCHED (IPC) H04L |

The present search report has been drawn up for all claims

| Place of search | Date of completion of the search | Examiner |
|---|---|---|
| Munich | 21 January 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4959

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | Publication date | Patent family member(s) | | Publication date |
|---|---|---|---|---|
| US 2023188319 A1 | 15-06-2023 | CA | 3177895 A1 | 11-11-2021 |
| | | EP | 4136559 A1 | 22-02-2023 |
| | | ES | 2986960 T3 | 13-11-2024 |
| | | US | 2023188319 A1 | 15-06-2023 |
| | | WO | 2021223873 A1 | 11-11-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HIJAZI, N. M.** ; **ALOQAILY, M.** ; **GUIZANI, M.** ; **OUNI, B** ; **KARRAY, F.** Secure Federated Learning With Fully Homomorphic Encryption for IoT Communications.. *IEEE Internet of Things Journal*, 2024, vol. 11 (3), 4289-4300
- **MOUCHET, C.** ; **TRONCOSO-PASTORIZA, J.R.** ; **BOSSUAT, J.** ; **HUBAUX, J.** Multiparty Homomorphic Encryption from Ring-Learning-with-Errors.. *Proceedings on Privacy Enhancing Technologies,*, 2021, vol. 2021, 291-311
- **MOUCHET, C.** ; **BERTRAND, E.** ; **HUBAUX, JP.** An Efficient Threshold Access-Structure for RLWE-Based Multiparty Homomorphic Encryption.. *J Cryptol*, 2023, vol. 36 (10)
- Multi-Key Homomorphic Encryption from TFHE.. **CHEN, H.** ; **CHILLOTTI, I.** ; **SONG, Y.** Advances in Cryptology -ASIACRYPT 2019. ASIACRYPT 2019. Lecture Notes in Computer Science. Springer, 2019, vol. 11922
- **LÓPEZ-ALT, A.** ; **TROMER, E.** ; **VAIKUNTA-NATHAN, V.** On-the-fly multiparty computation on the cloud via multikey fully homomorphic encryption.. *IACR Cryptol. ePrint Arch.*, 2012, vol. 2013, 94